# EUROPEAN PATENT APPLICATION

(11) **EP 3 632 272 A1**
(43) Date of publication of application: **08.04.2020**
(21) Application number: 18197865.1
(22) Date of filing: 01.10.2018
(51) Int. Cl.: A47J 27/00, A47J 27/04

(54) **RICE COOKER AND RICE COOKING METHOD**

(71) Applicant: Koninklijke Philips N.V., 5656 AG Eindhoven (NL)
(72) Inventor: XIAO, Weimin, 5656 AE Eindhoven (NL); SU, Guangming (Roger), 5656 AE Eindhoven (NL); LU, Weihua (Lucia), 5656 AE Eindhoven (NL); JIN, Yafang, 5656 AE Eindhoven (NL); KUI, Xiao Yun (Shirley), 5656 AE Eindhoven (NL)
(74) Representative: de Haan, Poul Erik

(57) **Abstract**

A rice cooker includes a heater and a cooling system. After cooking the rice using the heater, there is an active cooling down to an incubation temperature in the range 40 to 65 degrees and this temperature range is maintained for an incubation period of at least 30 minutes. The active temperature decrease causes formation of starch crystallites, and these grow during the incubation time at the incubation temperature. The growth of these crystallites results in a lower rapid digestible starch content.

The cooking for example comprises heating rice and water to a first temperature in the range 50 to 70 for between 5 and 20 minutes, heating the rice and water to a second temperature above 90 degrees and cooking for a second period between 15 and 45 minutes.

## Description

### FIELD OF THE INVENTION

This invention relates to the cooking of rice, in particular white rice.

### BACKGROUND OF THE INVENTION

Nutrients are chemicals found in foods that are critical to human growth and function. There are six groups of essential nutrients: carbohydrates, lipids, proteins, vitamins, minerals and water. Carbohydrates together with lipids and proteins provide energy for the body, particularly for the brain and for physical exercise.

White rice is a starch based food and is an important staple food for much of the world. Our bodies easily digest most cooked starches, in which alpha bonds link the numerous glucose units together.

One of the concerns associated with the consumption of white rice (and starch-based food generally) is the high glycemic property and its relationship to diabetes. For a balanced healthy diet, a reduced intake of digestible food is desired to avoid over-intake of energy and reduce the risk of obesity or diabetes.

Starch can be divided into three types: Rapid digestible starch (RDS), slowly digestible starch (SDS) and resistant starch (RS). RDS can induce a steep rise of blood glucose levels and insulin response since it can be digested quickly. The quick increase of blood glucose may promote metabolic diseases such as obesity and diabetes. Indeed, studies have shown a close relationship with the incidence of diabetes.

On the contrary, SDS and RS may reduce the incidence of metabolic diseases and at the same time promote gut health. SDS contributes to a gradual increase in blood glucose levels and thus may play an important role to maintain smooth postprandial glycemic response. RS cannot be digested to release glucose and is regarded as one kind of dietary fiber. As the starch will be fully gelatinized during cooking, RDS is the dominant starch format in normal cooked rice. To reduce the glycemic index of white rice, RDS reduction is desired.

During the cooking of rice, several stages occur relating to the transformation of the starch molecular structure. These stages include glass transition, gelatinization, swelling, pasting and leaching of amylose and retrogradation.

The starch retrogradation is a process in which disaggregated amylose and amylopectin chains reassemble to more ordered structures. As a result of this retrogradation process, rapid digestible starch content will be decreased while slowly digestible starch and resistant starch content will be increased. In the retrogradation process, starch crystallites formation and growth are two key steps, where temperature control plays important role.

Reducing RDS content in cooked white rice is a good way to reduce its glycemic index and can help consumers to better manage their blood glucose level. Different methods have been proposed for this purpose, such as washing the rice to reduce starch content or control the gelatinization degree through temperature control during cooking. However, the washing methods do not really reduce the rapid digestible starch content in cooked rice unless the water content is increased, which will sacrifice taste. Similarly, gelatinization control will also sacrifice taste though it can reduce RDS content. As a staple food, both taste and health considerations are important for consumers.

### SUMMARY OF THE INVENTION

The invention is defined by the claims.

According to examples in accordance with an aspect of the invention, there is provided a rice cooker, comprising:
a vessel for receiving a volume of water and a quantity of rice;
a heater for heating the vessel contents;
a cooling system; and
a controller for controlling the heater and cooling system, wherein the controller is adapted to implement a cooking sequence which comprises:
   cooking the rice;
   after the rice cooking, decreasing the temperature of the cooked rice to an incubation temperature in the range 40 to 65 degrees using the cooling system and then maintaining the incubation temperature in said range for an incubation period of at least 30 minutes.

This rice cooker implements a cooking cycle which involves a cooking process followed by an active cooling to an incubation temperature. This incubation lasts for a relatively long time (a period of at least 30 minutes, for example up to three hours) and is at a temperature at which rice may be consumed, and below the gelatinization temperature (which is around 68 degrees for white rice). The temperature decrease function causes formation of starch crystallites, and these grow during the incubation time at the incubation temperature. The growth of these crystallites results in a lower rapid digestible starch content.

The incubation temperature is for example in the range 45 to 65 degrees, for example 55 to 60 degrees.

These are temperatures which are optimum for subsequent consumption of the rice, without further heating.

The cooling system may comprise a fan for blowing air against or across an outer surface of the vessel when decreasing the temperature from the second temperature to the incubation temperature.

The cooling thus involves loss of heat to the ambient surroundings. The fan is used to increase the natural cooling by providing an air flow away from the vessel. It may use air at the ambient temperature if the cooling rate is sufficient.

The cooling system may comprise a cooler for cooling the air to blow against or across the outer surface of the vessel below ambient temperature.

By blowing cooled air, the rate of cooling can be made higher.

The temperature of the cooled air is preferably above 0 degrees. This prevents freezing of any of the rice (i.e. the water content of the rice), which may affect the taste. Thus a low air temperature, but above freezing point, enables rapid cooling without risk of freezing during the cooling process.

In another example, the cooling system comprises a cooler for cooling the ambient temperature around the outer surface of the vessel.

This provides another option for providing active, assisted, cooling which does not require a fan.

The cooking may comprise:
heating the rice and water to a first temperature in the range 50 to 70 degrees and then maintaining the first temperature in said range for a first period between 5 and 20 minutes;
heating the rice and water to a second temperature above 90 degrees and cooking the rice for a second period between 15 and 45 minutes.

This provides a two-stage cooking cycle.

Overall, the three stages provide a balance between taste, nutritional value and cooking time. The particular time periods adopted may be selected to provide a desired combination of these properties. For example, a lowest rapidly digestible starch content may imply a longer cooking time.

The controller may be adapted to decrease the temperature from the second temperature to the incubation temperature at an average rate of more than 3.4 degrees per minute, for example more than 3.7 degrees per minute.

These cooling rates enable optimum crystal formation and thereby give the end result of a greatest reduction in rapidly digestible starch.

The rice cooker is preferably for cooking white rice.

The invention also provides a method of cooking rice using a rice cooker, comprising:
receiving a volume of water and a quantity of rice to the rice cooker vessel; and
implementing a cooking sequence which comprises:
   cooking the rice; and
   using a cooling system to decrease the temperature of the cooked rice to an incubation temperature in the range 40 to 65 degrees and then maintaining the incubation temperature in said range for an incubation period of at least 30 minutes.

This provides active cooling to an incubation temperature. This causes formation of starch crystallites which grow during the incubation time finally resulting in a lower rapid digestible starch content.

The incubation temperature is for example in the range 45 to 65 degrees, for example 55 to 60 degrees.

Using a cooling system may comprise:
blowing ambient air against or across an outer surface of the vessel; or
cooling ambient air and then blowing the cooled ambient air against or across an outer surface of the vessel; or
cooling a space between the cooker vessel and an outer body of the rice cooker.

The cooking may comprise:
heating the rice and water to a first temperature in the range 50 to 70 degrees and maintaining the first temperature for a first period between 5 and 20 minutes; and
heating the rice and water to a second temperature above 90 degrees and cooking the rice for a second period between 15 and 45 minutes.

This provides a two stage cooking process.

The method may comprise decreasing the temperature from the second temperature to the incubation temperature at an average rate of more than 3.4 degrees per minute, for example more than 3.7 degrees per minute. A high cooling rate has been found to be responsible for reducing the final amount of rapid digestible starch.

The method may comprise receiving the volume of water and quantity of rice with a ratio of the mass of water to rice between 1:1 and 1.6:1.

The method may be implemented at least in part by software.

### BRIEF DESCRIPTION OF THE DRAWINGS

Examples of the invention will now be described in detail with reference to the accompanying drawings, in which:
Figure 1 shows a rice cooker;
Figure 2 shows a rice cooking method;
Figure 3 shows different cooling rates; and
Figure 4 shows the effect of the different cooling rates of Figure 3 on the rapidly digestible starch content.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a rice cooker which includes a heater and a cooling system. After cooking the rice, there is an active cooling down to an incubation temperature in the range 40 to 65 degrees and this temperature range is maintained for an incubation period of at least 30 minutes. The active temperature decrease causes formation of starch crystallites, and these grow during the incubation time at the incubation temperature. The growth of these crystallites results in a lower rapid digestible starch content.

The cooking for example comprises heating rice and water to a first temperature in the range 50 to 70 for between 5 and 20 minutes, heating the rice and water to a second temperature above 90 degrees and cooking for a second period between 15 and 45 minutes.

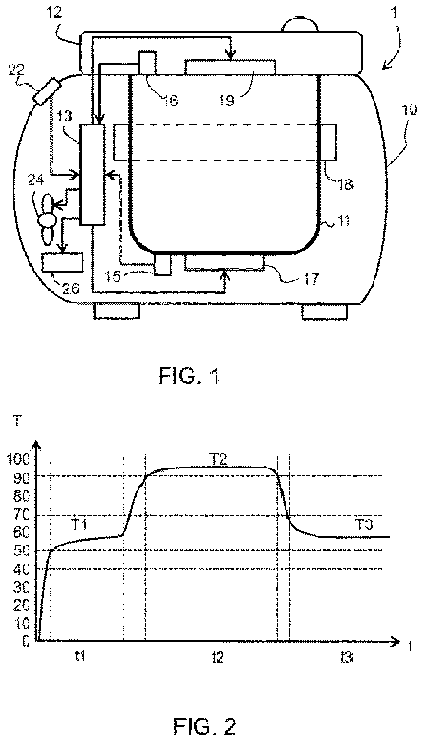

Figure 1 shows a rice cooker 1 which comprises a main body 10 in which is inserted an internal vessel 11 for cooking the rice. The vessel 11 is for receiving a volume of water and a quantity of rice.

The housing is equipped with a lid 12 mounted on a hinge on the housing 10 so that the upper part of the main body is opened or closed by the lid 12. A controller 13 provides control of the rice cooker.

The vessel is metal. The thermal insulation required to retain heat during and after cooking is provided by the main body 10 and insulation between the main body 10 and the vessel 11.

There may be an air space immediately around the vessel, or there may be solid insulation in contact with the outside of the vessel. If there is an air space, the cooling may be performed based on the flow of air to and from that space.

If there is a solid insulating jacket in contact with the outer wall of the vessel, it may be moved (e.g. dropped down) to create an air space around the outside of the vessel, which again may be used as an air flow channel. Equivalently, the vessel may be moved up to create an air space between the outer wall of the vessel and a static insulating jacket.

The option of a movable jacket or vessel is not shown in Figure 1. The implementation of this option would be routine to those skilled in the art. Thus, the description below is based on a design with an air space around the vessel before the thermal insulation of the main body 10, and this air space is used for the cooling function.

The rice cooker 1 also comprises a first sensor 15 for detecting the temperature of the lower part of the vessel 11. The first sensor 15 is mounted near the bottom of the vessel 11. A second sensor 16 for detecting the temperature of the inner surface of the lid 12 is mounted on the lid. The first and second sensors are connected to the controller 13.

A main heater 17 at the base of the vessel provides control of the temperature of the rice and water. There is also optionally a second heating element 18 to heat around the side wall of the vessel 11 and optionally also a heating element 19 to heat the inner surface of the lid 12.

The housing 10 and the lid 12 are for example plastic.

The rice cooker has control buttons 22 which provide a user interface. The user input is relayed to the controller 13.

The controller 13 provides control of the heating elements 17, 18, 19 to activate or deactivate according to a selected cooking program and also based on feedback from the temperature sensors 15, 16.

The rice cooker is able to implement a desired cooking cycle by controlling the temperature in the vessel over time. The temperature is controlled using feedback control and using a timer of the controller.

Only the most basic features of a known device are shown in Figure 1. The rice cooker may have additional features, such as a weighing scale for determining a quantity of rice and water (either separately or together) so that the cooking cycle maybe selected automatically. In this example, the user adds rice and water to the vessel. The rice cooker may instead have a separate water reservoir, and it may then deliver water to the vessel itself.

The rice cooker is in particular for cooking white rice, since the issue of rapidly digestible starch is a particular problem for white rice. However, the rice cooker may have additional cooking cycles for other types of rice, or even for other grains. Thus, the cooking method described below may be only one of many modes of operation of the rice cooker. These additional possible modes of operation, and possible automation functions, are not the subject of this invention and will not be described further.

The invention provides a cooling system, the purpose of which is described below. The cooling system shown in Figure 1 comprises a fan 24. It is used to blow air against or across an outer surface of the vessel 11 to implement cooling of the vessel contents, which is part of the cooking cycle described below.

The cooling is thus achieved by removing heat to the ambient surroundings. The fan draws air in to the space between the main body 10 and the vessel 11 from an inlet duct (not shown) and expels the air from an outlet duct (not shown).

Thus, the fan provides active venting of the space between the vessel and the main body to draw heat away from the vessel. There may be active or passive valves associated with the inlet and outlet duct so that when the cooling system is not active, there remains good thermal insulation between the vessel and the ambient surroundings.

The fan may be used to deliver air to the vessel wall at the ambient temperature. However, there may additionally be a local cooling device 26 for cooling the air drawn in so that a more rapid cooling rate may be achieved.

The cooling device for example comprises a Peltier device.

In another example, the cooling device 26 may comprise a refrigerating panel to cool the space to achieve the incubation temperature. In this case, a fan may not be needed.

When active cooling of the air to be delivered by the fan is employed, the temperature of the cooled air is preferably above 0 degrees. This prevents freezing of any of the rice, which may affect the taste. Thus a low air temperature, but above freezing point, enables rapid cooling without risk of freezing during the cooling process. The temperature may be below 0 degrees, as long as the timings, flow dynamics etc. do not result in freezing of any of the rice grains.

Figure 2 shows an example of the cooking sequence implemented by the controller 13. This example makes use of a two-stage cooking process, before the active cooling step. However, this is just one example.

Figure 2 shows the temperature of the rice (or rice and water) in the rice cooker over time.

The cooking sequence in this example comprises a first step of heating the rice and water to a first temperature T1 in the range 50 to 70 degrees and then maintaining the first temperature for a first period t1 between 5 and 20 minutes. The temperature is for example near 60 degrees, e.g. in the range 55 to 65 degrees. The temperature does not need to be maintained accurately at a constant value, but it is maintained within the temperature range.

Next, in a second step the rice and water is heated to a second temperature T2 above 90 degrees and the rice is cooked for a second period t2 between 15 and 45 minutes. The temperature is for example near 95 degrees.

These two steps are well known. In the second step, the cooking may not simply involve applying a constant or even near constant temperature as is shown in Figure 2. Instead, a more special cooking profile may be adopted, rather than simply maintaining at the second temperature.

A third step involves decreasing the temperature of the cooked rice to a third temperature T3 in the range 40 to 65 degrees, for example in the range 55 to 60 degrees, using the cooling system 24, 26 and then maintaining the temperature in that range for a third period of at least 30 minutes. This third temperature may be considered to be an incubation temperature and the the third period may be considered to be an incubation period.

Again, the temperature does not need to be maintained accurately at a constant value, but it is maintained in the temperature range. In particular, as explained below, the rice may be cooling naturally during this time, but the time period is sufficiently short that the rice does not drop below the bottom end of the temperature range (i.e. 40 degrees, or more preferably 55 degrees).

This example of the cooking cycle involves a known two-stage cooking process (at the first and second temperatures), followed by an active cooling to an incubation temperature (the third temperature). This incubation lasts for a relatively long time, of at least 30 minutes, and for example up to 3 hours. The temperature is high enough that the rice may be consumed, but below the gelatinization temperature (which is around 68 degrees for white rice).

The temperature decrease which takes place during cooling is particularly important. It causes the formation of starch crystallites, and these grow during the incubation time at the third temperature. The growth of these crystallites results in a lower rapid digestible starch content.

The cooling step after cooking involves more active control than simply leaving to cool. The vessel remains a closed chamber so the cooling system is used to actively draw heat away from the vessel. In particular, the cooking process may deliberately operate at an elevated pressure compared to the ambient pressure. The rice cooker may thus function as a pressure cooker.

The step of maintaining the third temperature preferably relies only on the thermal insulation of the rice cooker (when the cooling system is not active). Thus, the temperature will not remain constant but will drop over time. However, the temperature remains in the desired range. Thus, no heating is needed during this time.

The controller continues to monitor the passage of time, so that the controller can indicate the end of the full cooking cycle at the appropriate time. The user will then open the lid 12 to end the overall cooking process. Until the lid is opened, the overall cooking cycle continues (i.e. the incubation time is longer) even if the original end time has been reached.

The third temperature is for example in the range 45 to 65 degrees, for example 55 to 60 degrees. This enables consumption as soon as the rice is removed from the vessel, without further heating. The third period t3 may be considered to start when the rice drops to the temperature at the top of the third temperature range. For example, Figure 2 shows the third time period t3 starting when the rice temperature has dropped to 65 degrees.

As mentioned above, the cooling process is important. Suitable cooling rates have been found by experiment. The experiment involved the use of a conventional rice cooker in combination with an incubator for cooling the rice after cooking to the third temperature (60 degrees).

The incubation involved removing the vessel containing the rice and placing in a cooling environment until the rice had cooled to a desired incubation temperature. Three cooling environment temperatures were used; -18 degrees (freezer temperature), 4 degrees (fridge temperature) and 30 degrees (warm ambient temperature).

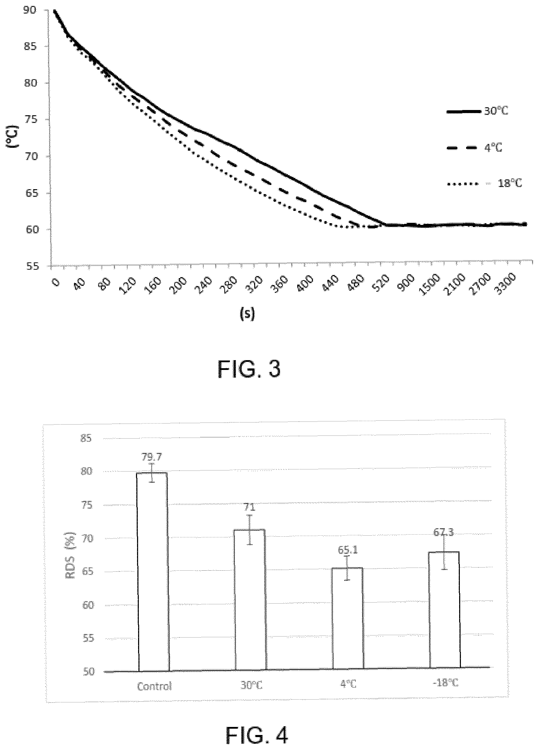

Figure 3 shows the effect of the different cooling environment temperatures on the cooling of the rice. It shows the rice temperature (y-axis) over time (x-axis). The cooling was ended when the temperature had dropped to 60 degrees.

The RDS content in the total starch was analyzed and the results are shown in Figure 4, for the three cooling environment temperatures and for a control (with no cooling). The results show that the RDS content in the three treatment samples are all decreased, compared with the control. The cooling environment temperature has significant effect on the RDS content reduction.

The sample cooled with a cooling environment at 4°C shows the lowest RDS content. The reason is that the cooling process induces the formation of starch crystallites, then incubation at a relatively high temperature (such as 60°C) benefits the growth of the starch crystallites and increases the amount of crystallites.

A higher temperature reduction rate is better for starch crystallites formation. Thus, the sample cooled with a cooling environment at 4°C is better than the sample incubated at 30 °C. For the sample cooled with a cooling environment at -18 °C, however, the freezing of water will form ice crystallites. On the one hand, the ice crystallites will inhibit starch crystallites formation, which may limit the starch retrogradation. On the other hand, the melting of the ice crystallites will form micro channels in the starch, which will enhance the contact between enzymes and starch molecules. Meanwhile, freezing will damage the taste of the rice. Thus, freezing of the rice should be avoided in this process.

In this example 60 degrees is chosen as the incubation temperature. There are several considerations for temperature selection. Firstly, a higher temperature may benefit crystallite growth and increase the total crystallite amount. Secondly, the temperature should not be close to or larger than the starch gelatinization temperature (about 68 °C for rice starch). Finally, the temperature should be suitable to consumers to eat. Overall, 55-60 degrees is a suitable temperature range.

For the incubation time, in principle, a longer time may generate more crystallites which may lead to lower rapid digestible starch content. However, two other side effects of a long time incubation should be considered, The first is the cooking time that consumer can accept (a cooking time which is too long is not acceptable for most consumers). The second is the taste as too much SDS and RS content may lead to taste deterioration.

It has been found that a 1 hour incubation achieves a good balance between cooking time, RDS reduction effect and taste.

Based on the temperature profiles shown in Figure 3, it can be concluded that the controller should in a preferred implementation decrease the temperature from the second temperature to the third temperature at an average rate of more than 3.4 degrees per minute, for example more than 3.7 degrees per minute.

By way of example, the volume of water and quantity of rice are typically provided to the rice cooker with a ratio of the mass of water to rice between 1:1 and 1.6:1.

The cooking method may be implemented at least in part by software running on the controller 13.

The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media maybe fixed within a processor or controller or may be transportable, such that the one or more programs stored thereon can be loaded into a processor or controller.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A rice cooker (1), comprising:
a vessel (11) for receiving a volume of water and a quantity of rice;
a heater (17, 18, 19) for heating the vessel contents;
a cooling system (24, 26); and
a controller (13) for controlling the heater and cooling system, wherein the controller is adapted to implement a cooking sequence which comprises:
cooking the rice;
after the rice cooking, decreasing the temperature of the cooked rice to an incubation temperature (T3) in the range 40 to 65 degrees using the cooling system and then maintaining the incubation temperature in said range for an incubation period of at least 30 minutes.

2. A rice cooker as claimed in claim 1, wherein the incubation temperature (T3) is in the range 45 to 65 degrees, for example 55 to 60 degrees.

3. A rice cooker as claimed in claim 1 or 2, wherein the cooling system comprises a fan (24) for blowing air against or across an outer surface of the vessel when decreasing the temperature to the incubation temperature (T3).

4. A rice cooker as claimed in claim 3, wherein the cooling system comprises a cooler (26) for cooling the air to blow against or across the outer surface of the vessel (11) below ambient temperature.

5. A rice cooker as claimed in claim 4, wherein the temperature of the cooled air is above 0 degrees.

6. A rice cooker as claimed in claim 1 or 2, wherein the cooling system comprises a cooler for cooling the ambient temperature around the outer surface of the vessel.

7. A rice cooker as claimed in any one of claims 1 to 6, wherein the controller is adapted to implement a cooking cycle which cooks the rice by:
heating the rice and water to a first temperature (T1) in the range 50 to 70 degrees and then maintaining the first temperature in said range for a first period between 5 and 20 minutes; and
heating the rice and water to a second temperature (T2) above 90 degrees and cooking the rice for a second period between 15 and 45 minutes.

8. A rice cooker as claimed in claim 7, wherein the controller (13) is adapted to decrease the temperature from the second temperature (T2) to the incubation temperature (T3) at an average rate of more than 3.4 degrees per minute, for example more than 3.7 degrees per minute.

9. A rice cooker as claimed in any one of claims 1 to 8 for cooking white rice.

10. A method of cooking rice using a rice cooker, comprising:
receiving a volume of water and a quantity of rice to the rice cooker vessel; and
implementing a cooking sequence which comprises:
cooking the rice; and
using a cooling system (24, 26) to decrease the temperature of the cooked rice to an incubation temperature (T3) in the range 40 to 65 degrees and maintaining the incubation temperature (T3) in said range for an incubation period of at least 30 minutes.

11. A method claimed in claim 10, wherein the incubation temperature (T3) is in the range 45 to 65 degrees, for example 55 to 60 degrees.

12. A method as claimed in claim 10 or 11, wherein using a cooling system comprises:
blowing ambient air against or across an outer surface of the vessel (11); or
cooling ambient air and then blowing the cooled ambient air against or across an outer surface of the vessel (11); or
cooling a space between the cooker vessel and an outer body of the rice cooker.

13. A method as claimed in any one of claims 10 to 12, wherein cooking the rice comprises:
heating the rice and water to a first temperature (T1) in the range 50 to 70 degrees and then maintaining the first temperature in said range for a first period between 5 and 20 minutes; and
heating the rice and water to a second temperature (T2) above 90 degrees and cooking the rice for a second period between 15 and 45 minutes.

14. A method as claimed in claims 13, comprising decreasing the temperature from the second temperature to the incubation temperature at an average rate of more than 3.4 degrees per minute, for example more than 3.7 degrees per minute.

15. A computer program comprising code means adapted, when said program is run on a computer, to implement the cooking sequence of the method of any one of claims 10 to 14.
